(19) Europäisches Patentamt
European Patent Office
Office européen des brevets

(11) Veröffentlichungsnummer: **0 472 063 A2**

(12) # EUROPÄISCHE PATENTANMELDUNG

(21) Anmeldenummer: **91113386.6**

(22) Anmeldetag: **09.08.91**

(51) Int. Cl.5: **C08G 18/08**, C08G 18/10, C08G 18/76, C08G 18/79, //(C08G18/79,101:00)

(30) Priorität: **22.08.90 DE 4026474**

(43) Veröffentlichungstag der Anmeldung: **26.02.92 Patentblatt 92/09**

(84) Benannte Vertragsstaaten: **AT BE CH DE ES FR GB IT LI NL SE**

(71) Anmelder: **BAYER AG**

**W-5090 Leverkusen 1 Bayerwerk(DE)**

(72) Erfinder: **Scholl, Hans Joachim, Dr.**
**Am Feldrain 5**
**W-5000 Köln 80(DE)**
Erfinder: **Welte, Rainer, Dr.**
**Kaiserstrasse 7**
**W-5090 Leverkusen 1(DE)**
Erfinder: **Gleitsmann, Günter, Dr.**
**Schönwasserstrasse 261**
**W-4150 Krefeld(DE)**

(54) **Neue Isocyanuratgruppen aufweisende Polyisocyanatmischungen, ein Verfahren zu ihrer Herstellung und ihre Verwendung zur Herstellung von Polyurethanschaumstoffen.**

(57) Flüssige, Isocyanuratgruppen aufweisende Polyisocyanatmischungen mit einem NCO-Gehalt von 15 bis 30 Gew.-%, erhältlich durch Trimerisierung eines Teils der Isocyanatgruppen von Polyisocyanatgemischen der Diphenylmethanreihe mit einem Gehalt an Diisocyanatodiphenylmethan-Isomeren von 80 bis 100 Gew.-% und 0 bis 20 Gew.-% an höher als difunktionellen Polyisocyanaten der Diphenylmethanreihe, wobei sich die Diisocyanatodiphenylmethan-Isomeren zu 40 bis 80 Gew.-% aus 4,4'-Diisocyanatodiphenylmethan, 20 bis 60 Gew.-% aus 2,4'-Diisocyanatodiphenylmethan und 0 bis 8 Gew.-% aus 2,2'-Diisocyanatodiphenylmethan zusammensetzen und sich die genannten Prozentsätze zu 100 ergänzen, indem man, gegebenenfalls unter Mitverwendung von Hydroxylgruppen-haltigen Komponenten, in Gegenwart eines die Trimerisierung beschleunigenden Katalysators die Trimerisierung bis zum jeweils erwünschten Trimerisierungsgrad durchführt und sie anschließend durch Zugabe eines Katalysatorgiftes abbricht. Die so erhaltenen flüssigen Polyisocyanatmischungen werden zur Herstellung von Polyurethanschaumstoffen verwendet.

EP 0 472 063 A2

Die Erfindung betrifft neue, flüssige Isocyanuratgruppen aufweisende Polyisocyanatmischungen, gegebenenfalls mit einem unterschüssigen Anteil an Urethangruppen, auf Basis von Polyisocyanatgemischen der Diphenylmethanreihe, ein Verfahren zur Herstellung dieser Polyisocyanatmischungen und ihre Verwendung bei der Herstellung von Polyurethanschaumstoffen.

Verfahren zur Trimerisierung organischer Isocyanate sind in großer Zahl bekannt (J.H. Saunders und K.C. Frisch, Polyurethanes Chemistry and Technology, S. 94 ff(1962)). Als Katalysatoren für die Trimerisierung sind starke organische Basen geeignet, so z.B. die alkalisch wirkenden Metallphenolate, Alkalimetallcarbonate, tert. Amine, tert. Phosphine und die "Onium"-Verbindungen von Stickstoff und Phosphor sowie basische Heterocyclen dieser Elemente.

Die Verwendung von quaternären Ammoniumhydroxiden als Katalysator für die Trimerisierung von Isocyanatgruppen ist mehrfach vorbeschrieben. So werden gemäß JP-PS 601 337 (US-PS 3 487 080) quaternäre Ammoniumhydroxide zusammen mit bestimmten Cokatalysatoren verwendet, wobei in den Ausführungsbeispielen vor allem die Teiltrimerisierung von aromatischen Diisocyanaten gezeigt wird.

Für derartige Teiltrimerisierungen werden auch nach DE-AS 2 551 634 vorteilhaft sogenannte "Mannich-Basen" verwendet. Gemäß DE-OS 3 827 596 sind auch Katalysatoren aus Alkalifluoriden und quartären Ammonium- bzw. Phosphoniumsalzen hervorragende Trimerisierungsmittel.

Regelmäßig werden in diesen Veröffentlichungen auch Di- oder Polyisocyanatgemische der Diphenylmethanreihe als Ausgangsmaterialien zur Trimerisierung pauschal genannt, ohne daß konkrete Beispiele für entsprechende flüssige, lagerstabile, Isocyanuratgruppen aufweisende Polyisocyanatmischungen offenbart werden. Nach US-PS 3 487 080 (Tabelle 3) werden lediglich "Gelierprodukte" aus "MDI"-Trimerisierungen beschrieben, um Katalysatorwirksamkeiten zu dokumentieren. Die Neigung derartiger Ausgangs-Isocyanate zur Lagerinstabilität ist literaturbekannt. (Chem.Soc.Rev. 3/1974/, S.227). Katalysatorzusätze können diese Neigung nur noch verstärken, sodaß Instabilität (Gelieranteile, Festkörperanteile) diesen Gemischen innewohnt.

Es war daher die der Erfindung zugrundeliegende Aufgabe, Polyisocyanatgemische der Diphenylmethanreihe zur Verfügung zu stellen, die lagerstabil und flüssig sind und Isocyanuratgruppen aufweisen.

Wie überraschenderweise gefunden wurde, konnte diese Aufgabe mit den nachstehend näher beschriebenen Polyisocyanatgemischen der Diphenylmethanreihe gelöst werden.

Gegenstand der Erfindung sind flüssige, Isocyanuratgruppen aufweisende Polyisocyanatmischungen mit einem NCO-Gehalt von 15 bis 30 Gew.-%, erhältlich durch Trimerisierung eines Teils der Isocyanatgruppen von Polyisocyanatgemischen der Diphenylmethanreihe mit einem Gehalt an Diisocyanatodiphenylmethan-Isomeren von 80 bis 100 Gew.-% und 0 bis 20 Gew.-% an höher als difunktionellen Polyisocyanaten der Diphenylmethanreihe, wobei sich die Diisocyanatodiphenylmethan-Isomeren zu 40 bis 80 Gew.-% aus 4,4'-Diisocyanatodiphenylmethan, 20 bis 60 Gew.-% aus 2,4'-Diisocyanatodiphenylmethan und 0 bis 8 Gew.-% aus 2,2'-Diisocyanatodiphenylmethan zusammensetzen und sich die genannten Prozentsätze zu 100 ergänzen.

Erfindungsgemäß bevorzugt sind flüssige, Isocyanuratgruppen aufweisende Polyisocyanatmischungen, bei denen 0 bis 50 % der abreagierten Isocyanatgruppen in Urethangruppen überführt worden sind.

Gegenstand der Erfindung ist auch ein Verfahren zur Herstellung solcher flüssiger Polyisocyanatmischungen, dadurch gekennzeichnet, daß man einen Teil der Isocyanatgruppen von Polyisocyanatgemischen der Diphenylmethanreihe mit einem Gehalt an Diisocyanatodiphenylmethan-Isomeren von 80 bis 100 Gew.-% und 0 bis 20 Gew.-% an höher als difunktionellen Polyisocyanaten der Diphenylmethanreihe, wobei sich die Diisocyanatodiphenylmethan-Isomeren zu 40 bis 80 Gew.-% aus 4,4'-Diisocyanatodiphenylmethan, 20 bis 60 Gew.-% aus 2,4'-Diisocyanatodiphenylmethan und 0 bis 8 Gew.-% aus 2,2'-Diisocyanatodiphenylmethan zusammensetzen und sich die genannten Prozentsätze zu 100 ergänzen, gegebenenfalls unter Mitverwendung von Hydroxylgruppen-haltigen Komponenten, in Gegenwart eines die Trimerisierung beschleunigenden Katalysators bis zum jeweils erwünschten Trimerisierungsgrad trimerisiert und anschließend die Trimerisierungsreaktion durch Zugabe eines Katalysatorgiftes abbricht.

Gegenstand der Erfindung ist schließlich auch die Verwendung der erfindungsgemäßen flüssigen Polyisocyanatmischungen zu Herstellung von Polyurethanschaumstoffen mit verbesserten Festigkeiten.

Ausgangskomponenten sind spezielle Polyisocyanatgemische der Diphenylmethanreihe. Derartige Polyisocyanatgemische mit erhöhtem Anteil an 2,4'-Diisocyanatodiphenylmethan können beispielsweise durch Phosgenierung der ihnen entsprechenden Polyamingemische erhalten werden, die ihrerseits auf direktem Weg durch Anilin/Formaldehyd-Kondensation gemäß DE-OS 3 407 494 zugänglich sind. Der Gehalt der Diisocyanat- bzw. Polyisocyanatgemische an 2,4'-Diisocyanatodiphenylmethan kann gewünschtenfalls auch durch Abmischung mit an 2,4'-Diisocyanatodiphenylmethan angereichten Fraktionen erhöht werden, wie sie beim Andestillieren von Phosgenierungsprodukten von Anilin/Formaldehyd-Kondensaten als Destilat erhältlich sind. Das erfindungsgemäße Verfahren wird in Gegenwart üblicher Trimerisierungskatalysatoren durchgeführt, vorzugsweise in Gegenwart der erwähnten Mannich-Basen oder der erwähnten Katalysatoren aus Alkalifluoriden und quartären Ammonium- bzw. Phosphoniumsalzen.

Vor Beginn der Trimerisationsreaktion oder im Zuge der Katalysatoreinbringung können Hydroxylgruppen-haltige (vorzugsweise flüssige) Komponenten mitverwendet werden, um:

a) die sogenannte Urethancokatalyse für Trimerisierungsreaktionen zu nutzen,

b) als Lösemittel für Trimerisationskatalysatoren zu dienen.

Geeignet sind Alkohole wie Methanol, Ethanol, 2-Ethylhexanol-1, 2-Ethylhexandiol-1,3 oder beliebige, flüssige Polyole, wie beispielsweise beschrieben im Kunststoffhandbuch "Polyurethane", Band 7, herausgegeben von G. Oertel, S. 15 - 18, (Verlag Carl Hanser, München 1983). Derartige Hydroxylgruppen-haltige Flüssigkeiten werden in der Regel in solchen Mengen zur Reaktion gebracht, daß 0 - 50 % der abreagierten Isocyanatgruppen in Urethangruppen überführt werden.

Die Menge des eingesetzten Katalysators hängt von der Qualität der Ausgangsisocyanate ab. Die jeweils notwendige Katalysatormenge läßt sich daher am einfachsten in einem Vorversuch bestimmen.

Das erfindungsgemäße Verfahren kann vorzugsweise lösungsmittelfrei oder auch in Anwesenheit von inerten Lösungs- und Verdünnungsmitteln durchgeführt werden. Als inerte Lösungsmittel können unpolare Verdünnungsmittel wie Toluol, Xylol, höhere Aromaten, Leichtbenzin, Testbenzin und $C_{12}$-$C_{20}$-Alkylsulfonsäureester, aber auch inerte polare Lösungsmittel wie Ester und Ketone bzw. Gemische derartiger Lösungsmittel eingesetzt werden.

Die Trimerisierungsreaktion wird gemäß Erfindung im allgemeinen im Temperaturbereich zwischen 10 bis 100 °C, vorzugsweise 20 bis 80 °C, durchgeführt. Die optimale Reaktionstemperatur richtet sich nach der Art der eingesetzten Ausgangspolyisocyanate und der Art der eingesetzten Trimerisierungskatalysatoren und kann in einem einfachen Vorversuch ermittelt werden.

Die Trimerisierungsreaktion wird im allgemeinen bei Erreichen eines Trimerisierungsgrads (Trimerisierungsgrad = Prozentsatz der trimerisierten Isocyanatgruppen, bezogen auf Gesamtmenge der in Ausgangspolyisocyanat vorliegenden Isocyanatgruppen) von 5 bis 40, vorzugsweise 10 bis 30 % abgebrochen. Der Verlauf der Reaktion kann z,B. durch fortlaufende Bestimmung des Brechnungsindex oder durch Abnahme des NCO-Werts verfolgt werden.

Zur Beendigung der Trimerisierungsreaktion werden geeignete Katalysatorgifte verwendet, wie zum Beispiel organische Säuren bzw. Säurechloride, die die erfindungsgemäß eingesetzten Katalysatoren in ihrer Wirkung desaktivieren, z.B. Sulfonsäuren wie beispielsweise Benzol- oder Toluolsulfonsäuren oder ihre Chloride oder saure Ester der phosphorigen Säure oder der Phosphorsäure wie beispielsweise Dibutylphosphit, Dibutylphosphat oder Di-(2-ethylhexyl)-phosphat. Die beispielhaft genannnten, mit den Katalysatoren unter deren Desaktivierung chemisch reagierenden Desaktivatoren werden dem Reaktionsgemisch im allgemeinen in einer dem Katalysator zumindest äquivalenten Mengen zugefügt. Da die Katalysatoren jedoch während der Trimerisierungsreaktion teilweise desaktiviert werden, ist oftmals die Zugabe einer unteräquivalenten Menge des Desaktivators ausreichend.

Die erfindungsgemäßen Polyisocyanatgemische können selbstverständlich in an sich bekannter Weise mit geeigneten Blockierungsmitteln für Isocyanatgruppen wie z.B. Phenol, $\epsilon$-Caprolactam, Malonsäurediethylester oder Acetessigsäureethylester, blockiert werden.

Die erfindungsgemäßen Polyisocyanatgemische bzw. ihre durch die genannte Blockierungsreaktion erhaltenen Derivate stellen wertvolle Ausgangsmaterialien zur Herstellung von Polyurethankunststoffen nach dem Isocyanat-Polyadditionsverfahren dar.

Vorzugsweise werden die erfindungsgemäßen Polyisocyanatgemische zur Herstellung von Polyurethanschaumstoffen, insbesondere zur Herstellung von im wesentlichen geschlossenzelligen Urethan-, Harnstoff-, Biuret- und Isocyanuratgruppen aufweisenden Hartschaumstoffen und ganz besonders bevorzugt zur Herstellung von entsprechenden wassergetriebenen, FCKW-freien Hartschaumstoffen verwendet.

Die Herstellung wassergetriebener Hartschaumstoffe mit Urethan-, Harnstoff-, Biuret- und Isocyanuratgruppen ist z.B. in DE-OS 3 910 100 beschrieben: ausgehend von Polyisocyanaten ohne Isocyanuratanteile als zweite Verschäumungskomponente wird im Zuge der Verschäumung durch Mitverwendung von Trimerisierungskatalysatoren ein Isocyanuratgruppen enthaltener Hartschaum erzeugt.
Verfahrensnachteilig sind dabei aber:

a) Die kurze Reaktionszeit zur Isocyanuratbildung während des Verschäumvorgangs erschwert die Reproduzierbarkeit.

b) Die zusätzliche Wärmetönung der Isocyanuratbildung während des Aufschäumens ist bei wassergetriebenen, FCKW-freien Hartschäumen hinderlich für einen geregelten Schaumaufbau.

Durch Verwendung der erfindungsgemäßen, Isocyanuratgruppen aufweisenden Polyisocyanatmischungen werden diese Nachteile überwunden. Dies zeigt sich, wie den entsprechenden vergleichenden Verschäumungsbeispielen zu entnehmen ist, insbesondere in verbesserten Druckfestigkeiten von erfindungsgemäß erhältlichen Hartschaumstoffen. Die folgenden Ausführungsbeispiele erläutern die Erfindung.

Ausführungsbeispiele

Beschreibung der Versuche

A) Trimerisierungsbeispiele

Ausgangsprodukte

Katalysator A:

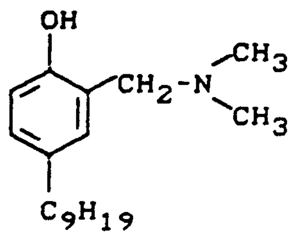

(gemäß DAS 2 551 634,)
( Beispiel B )

Katalysator B:

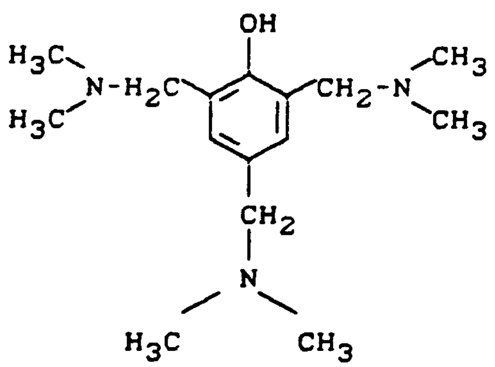

DMP 30, Fa. Röhm and Haas
USA

Katalysator C:
Methyltrialkyl ($C_8$-$C_{10}$) ammoniumfluorid in 2-Ethylhexanol-1 (gemäß DE-OS 3 827 596) $F^-$: 0.025 mMol/g

Polyol 1 Polyether der OH-Zahl 28 mit Propylenglykol als Starter und 87 % PO und endständigen 13 % EO. MG : 4010

Polyol 2 Polyether der OH-Zahl 28 mit Trimethylolpropan als Starter und 86 % PO und endständigen 14 % EO. MG : 6010

Isocyanatgemisch 1

| | | |
|---|---|---|
| 56 Gew.-% | 4,4' MDJ | NCO-Gehalt: 32,4 % |
| 29 Gew.-% | 2,4' MDJ | |
| 5 Gew.-% | 2,2' MDJ | |
| 10 Gew.-% | polymeres MDJ | |

Isocyanatgemisch 2

| | | |
|---|---|---|
| 46-47 Gew.-% | 4,4' MDJ | NCO-Gehalt: 33,3 % |
| 52-53 Gew.-% | 2,4' MDJ | |
| <1 Gew.-% | 2,2' MDJ | |

Isocyanatgemisch 3

| | | |
|---|---|---|
| 59 Gew.-% | 4,4' MDJ | NCO-Gehalt: 32,2 % |
| 23 Gew.-% | 2,4' MDJ | |
| 3 Gew.-% | 2,2' MDJ | |
| 15 Gew.-% | polymeres MDJ | |

Beispiel 1

3,8 kg Isocyanatgemisch 1 und 200 g Polyol 1 werden unter $N_2$/Rühren auf 60° C erwärmt und mit 6 g Katalysator A versetzt.

Nach ca. 5 1/2 Stunden ist der Brechungsindex auf $n_D^{23°C}$ : 16111 gestiegen, entsprechend einem NCO-Abfall auf 26,2 %. Danach wird die Trimerisierung durch Zugabe von 4,6 g Phosphorsäuredibutylester abgestoppt. Man erhält ein flüssiges Polyisocyanatgemisch mit den Daten:
NCO : 26,2 % Trimerisierungsgrad : 14 %
Viskosität (23° C): 1000 mPas Urethanisierungsgrad : 5 %

Beispiel 2

1,9 kg Isocyanatgemisch 1 werden mit 3,5 g Katalysator A bei 60° C zur Reaktion gebracht.

Nach ca. 1 1/2 Stunden ist der Brechungsindex auf $n_D^{23°C}$ : 1,6205 gestiegen, entsprechend einem NCO-Abfall auf 27,3 %. Nach Abstoppung mit 3 g Phosphorsäuredibutylester erhält man ein flüssiges Polyisocyanatgemisch mit den Daten:
NCO : 27,7 % Trimerisierungsgrad : 15,7 %
Viskosität (23° C): 900 mPas
Entsprechend durchgeführte Beispiele 3 bis 10 sind in Tabelle 1 zusammengestellt:

**Tabelle 1**

| | Beispiele | 3 | 4 | 5 | 6 | 7 | 8 | 9 | 10 |
|---|---|---|---|---|---|---|---|---|---|
| | Ausgangsprodukte | Isocyanat 1 (3.800 g) Polyol 2 (200 g) | Isocyanat 3 (1.900 g) Polyol 1 (100 g) | Isocyanat 3 (1.900 g) - | Isocyanat 1 (1.900 g) Polyol 1 (100 g) | Isocyanat 2 (2.000 g) - | Isocyanat 2 (2.150 g) Polyol 1 (100 g) | Isocyanat 1 (3.800 g) Polyol 2 (200 g) | Isocyanat 1 (1.900 g) Polyol 2 (100 g) |
| Trimerisierung | Katalysator | A (7,5g) | A (3,5g) | A (3,5g) | B (3,9g) | C (1,3g) | C (1,2g) | A (6g) | B (4g) |
| | Temperatur | 60°C | 60°C | 60°C | 60°C | 55°C | 55°C | 55°C | 55°C |
| | Zeit | 2 1/2 Std. | 2 1/2 Std. | 2 Std. | 8 Std. | 3 Std. | 2 Std. | 5 1/2 Std. | 7 1/2 Std. |
| | Stopper (nach Beispiel 1) | 7 g | 3 g | 3 g | 3,1 g | 0,2 g | 0,2 g | 4,6 g | 3,2 g |
| Produktdaten | NCO-Gehalt | 26,1 % | 24,7 % | 26,8 % | 27,6 % | 26,8 % | 24,1 % | 25,1 % | 26,1 % |
| | Viskosität (23°C) | 1300 mPas | 5000 mPas | 1900 mPas | 300 mPas | 1200m Pas | 10000 mPas | 3000 mPas | 1000 mPas |
| | Trimerisierungsgrad | 14 % | 18 % | 17 % | 10 % | 19,5 % | 22,8 % | 17,3 % | 14 % |
| | Urethanisierungsgrad | 5 % | 5,3 % | - | 5 % | - | 4,8 % | 5 % | 5 % |

## Beispiel 11

200 g Polyol 2 und 6 g Katalysator A werden vermischt und bei 50°C innerhalb von 5 Minuten im 3,8 kg Isocyanatgemisch 1 eingetragen. Nach ca. 4 Stunden bei 55°C ist der Brechungsindex auf $n_D^{23°C}$ :

16.108 gestiegen, entsprechend einem NCO-Abfall auf 26,6 %. Danach wird die Trimerisierung durch Zugabe von 4,6 g Phosphorsäuredibutylester abgestoppt. Man erhält ein flüssiges Polyisocyanatgemisch mit den Daten:

NCO: 26,6 % Trimerisierungsgrad: 12,4 %

Viskosität/23 °C: 900 mPas Urethanisierungsgrad: 5 %

Die nachfolgende Tabelle 2 listet Schaumrezepturen unter Mitverwendung der erfindungsgemäßen, flüssigen Polyisocyanatgemische auf (Beispiel 1 bis 3). Als Vergleich ist Beispiel 4 aus DE 3 910 100 angefügt. Die Herstellung daraus resultierender FCKW-freier Hartschäume erfolgt in an sich bekannter Weise.

Tabelle 3 belegt die vergleichsweise verbesserten Druckfestigkeiten in Schäumrichtung und senkrecht zur Verschäumungsrichtung.

Tabelle 2

| | Beispiele | | | Vergleichsbeispiel |
|---|---|---|---|---|
| | | | | Beispiel 4 aus DE 3 910 100 |
| | 1 | 2 | 3 | 5 |
| Weichschaumpolyether 1* | 35,6 | 30,5 | 33,8 | 41,4 |
| Hartschaumpolyester 1* | 7,1 | 6,0 | 6,7 | 8,2 |
| Hartschaumpolyether 2* | 7,1 | 6,0 | 6,7 | 8,2 |
| Flammschutzmittel 1* | 12,0 | 10,3 | 11,4 | 13,9 |
| Flammschutzmittel 2* | 12,0 | 10,3 | 11,4 | 13,9 |
| Wasser* | 2,9 | 2,9 | 2,9 | 2,9 |
| Polyethersiloxan* | 2,4 | 2,1 | 2,3 | 2,8 |
| Katalysator 1* | 2,7 | 2,3 | 2,5 | 3,1 |
| Polyisocyanat 2* | - | - | - | 170,4 |
| Polyisocyanat A* | 183,4 | - | - | - |
| Polyisocyanat B* | - | 194,5 | - | - |
| Polyisocyanat C* | - | - | 187,4 | - |
| NCO-Kennzahl | 230 | 230 | 230 | 230 |
| Startzeit (s) | 5 | 5 | 5 | 5 |
| Abbindezeit (s) | 13 | 17 | 15 | 10 |
| Steigzeit (s) | 57 | 95 | 67 | 41 |
| Rohdichte ($kg/m^3$) | 42 | 48 | 42 | 40 |

*Menge in Gew.-Teilen

| | |
|---|---|
| Weichschaumpolyether 1 | Polyether der OH-Zahl 28 mit Propylenglykol als Starter und 87 % Propylenoxid (PO) und endständig 13 % Ethylenoxid (EO) |
| Hartschaumpolyester 1 | Polyester der OH-Zahl 213 aus Adipinsäure/Phthalsäure (1:0,5) und Glyzerin/Propylenglykol |
| Hartschaumpolyether 2 | Polypropylenoxidether der OH-Zahl 875 mit Trimethylolpropan als Starter |

| | |
|---|---|
| Flammschutzmittel 1 | Dimethylmethanphosphonat |
| Flammschutzmittel 2 | Trichlorisopropylphosphat |
| Polyethersiloxan | handelsüblicher Stabilisator (B 8421 der Fa. Goldschmidt AG) |
| Katalysator 1 | 25 % Kaliumacetat in Diethylenglykol |
| Polyisocyanat 2 | rohes Diphenylmethandiisocyanat (Viskosität 24° C: ~ 200 mPa.s) |
| Polyisocyanat A | erfindungsgemäßes Trimeres nach Beispiel 2 |
| Polyisocyanat B | erfindungsgemäßes Trimeres nach Beispiel 4 |
| Polyisocyanat c | erfindungsgemäßes Trimeres nach Beispiel 11 |

**Tabelle 3**

**Prüfergebnisse Druckversuch**

| Beispiele aus Tabelle 2 | Druckversuch DIN 53421 | |
|---|---|---|
| | $\sigma_B$ 1) [M Pa] | $\sigma_{10}$ 2) [M Pa] |
| Beispiel 1 | 0,26 | 0,11 |
| Beispiel 2 | 0,29 | 0,17 |
| Beispiel 3 | 0,24 | 0,10 |
| Beispiel 4 (Vergleich) | 0,21 | 0,09 |

1) in Schäumrichtung

2) senkrecht zur Schäumrichtung

**Patentansprüche**

1. Flüssige, Isocyanuratgruppen aufweisende Polyisocyanatmischungen mit einem NCO-Gehalt von 15 bis 30 Gew.-%, erhältlich durch Trimerisierung eines Teils der Isocyanatgruppen von Polyisocyanatgemischen der Diphenylmethanreihe mit einem Gehalt an Diisocyanatodiphenylmethan-Isomeren von 80 bis 100 Gew.-% und 0 bis 20 Gew.-% an höher als difunktionellen Polyisocyanaten der Diphenylmethanreihe, wobei sich die Diisocyanatodiphenylmethan-Isomeren zu 40 bis 80 Gew.-% aus 4,4'-Diisocyanatodiphenylmethan, 20 bis 60 Gew.-% aus 2,4'-Diisocyanatodiphenylmethan und 0 bis 8 Gew.-% aus 2,2'-Diisocyanatodiphenylmethan zusammensetzen und sich die genannten Prozentsätze zu 100 ergänzen.

2. Flüssige, Isocyanuratgruppen aufweisende Polyisocyanatmischungen gemäß Anspruch 1, bei denen 0 bis 50 % der abreagierten Isocyanatgruppen in Urethangruppen überführt worden sind.

3. Verfahren zur Herstellung flüssiger Polyisocyanatmischungen gemäß Anspruch 1 und 2, dadurch gekennzeichnet, daß man einen Teil der Isocyanatgruppen von Polyisocyanatgemischen der Diphenylmethanreihe mit einem Gehalt an Diisocyanatodiphenylmethan-Isomeren von 80 bis 100 Gew.-% und 0 bis 20 Gew.-% an höher als difunktionellen Polyisocyanaten der Diphenylmethanreihe, wobei sich die Diisocyanatodiphenylmethan-Isomeren zu 40 bis 80 Gew.-% aus 4,4'-Diisocyanatodiphenylmethan, 20 bis 60 Gew.-% aus 2,4'-Diisocyanatodiphenylmethan und 0 bis 8 Gew.-% aus 2,2'-Diisocyanatodiphenylmethan zusammensetzen und sich die genannten Prozentsätze zu 100 ergänzen, gegebenenfalls unter Mitverwendung von Hydroxylgruppen-haltigen Komponenten, in Gegenwart eines die Trimerisierung beschleunigenden Katalysators bis zum jeweils erwünschten Trimerisierungsgrad trimerisiert und anschließend die Trimerisierungsreaktion durch Zugabe eines Katalysatorgiftes abbricht.

**4.** Verwendung der flüssigen Polyisocyanatmischungen gemäß Anspruch 1 bis 2 zur Herstellung von Polyurethanschaumstoffen.